# FASCICULE DE BREVET EUROPEEN

(11) **EP 1 228 589 B1**
(45) Date de publication et mention de la délivrance du brevet: **23.07.2003**
(21) Numéro de dépôt: 00969657.6
(22) Date de dépôt: 20.10.2000
(51) Int. Cl.: H04B 10/18

(54) **SYSTEME DE TRANSMISSION PAR FIBRE OPTIQUE UTILISANT DES IMPULSIONS RZ**
FASEROPTISCHES ÜBERTRAGUNGSSYSTEM MIT OPTISCHEN RZ-PULSEN
OPTICAL FIBRE TRANSMISSION SYSTEM USING RZ PULSES

(30) Priorité: 22.10.1999 FR 9913193
(43) Date de publication de la demande: 07.08.2002
(73) Titulaire: Corvis Algety, 22300 Lannion (FR)
(72) Inventeur: GEORGES, Thierry, F-22700 Perros Guirec (FR)
(74) Mandataire: Callon de Lamarck, Jean-Robert
(86) Numéro de dépôt international: FR0002923
(87) Numéro de publication internationale: WO01029994

(56) Documents cités:
- WO-A-97/20403
- FAVRE F ET AL: "20 GBIT/S SOLITON TRANSMISSION OVER 5200 KM OF NON-ZERO-DISPERSION-SHIFTED FIBRE WITH 106 KM DISPERSION-COMPENSATED SPAN" ELECTRONICS LETTERS,GB,IEE STEVENAGE, vol. 34, no. 2, 22 janvier 1998 (1998-01-22), pages 201-202, XP000773679 ISSN: 0013-5194

## Description

La présente invention est relative aux systèmes de transmission par fibre optique utilisant des impulsions RZ.

Elle trouve en particulier avantageusement application dans le cas de systèmes destinés à des applications terrestres, c'est à dire destinés à assurer des transmissions sur des distances inférieures à 4 000 kms.

On connaît déjà des systèmes de transmission par fibre optique sur de longues distances utilisant des impulsions RZ, et notamment des impulsions de type solitons, et mettant en oeuvre un multiplexage en longueur d'onde.

Il a récemment été mis en évidence que pour des distances de l'ordre de celles qui sont envisagées pour des applications terrestres, il était possible d'atteindre des débits importants (de l'ordre de 10 Gbits) en utilisant des impulsions RZ relativement larges - et notamment des impulsions solitons d'une durée de 20 à 30 ps.

On pourra à cet égard se référer à l'article :
- D. Le Guen, F. Favre, M.L. Moulinard, M. Henry, G. Michaud, L. Macé, F. Devaux, B. Charbonnier, T. Georges, « 200 Gbit/s 100 km-span soliton WDM transmission over 1000 km of standard fiber with dispersion compensation and pre-chirping », OFC'97, paper PD 17 (Dallas, Feb. 16-21), 1997.

Toutefois, le spectre occupé par des impulsions de 20 à 30 ps constitue encore une limitation de la densité du multiplexage en longueur d'onde qui peut être réalisée avec de tels systèmes.

En outre, les phénomènes de modulation de phase croisée modifient le spectre des signaux et diffusent l'énergie des impulsions sur les côtés de leur spectre, loin de leur fréquence centrale. La modulation de phase croisée est de ce fait responsable d'une part d'une déformation temporelle du signal qui induit notamment de l'interférence entre symboles et d'autre part de la diaphonie entre canaux lorsque l'on rapproche trop les canaux en longueur d'onde. Egalement, cette diffusion de l'énergie sur les côtés du spectre des impulsions augmente avec la puissance des canaux et avec la diminution de l'espacement entre ceux-ci.

Par ailleurs, ies phénomènes d'auto modulation de phase peuvent également interdire un espacement entre canaux trop faibles et être responsables d'un certain élargissement du spectre.

Pour toutes ces raisons, les systèmes qui ont pu être proposés à ce jour avec des espacements entre canaux inférieurs à 100 GHz et un débit par canal de 10 Gbits/s sont tous des systèmes de transmission de faibles puissances (inférieures à 2 dBm), ce qui limite leur portée et impose de prévoir un grand nombre d'amplificateurs.

On comprend par conséquent qu'il est souhaitable de pouvoir parfaitement contrôler le spectre des impulsions et ce sur toute la longueur de la ligne et que ceci est d'autant plus important lorsque l'on utilise des impulsions larges, puisque leur bande spectrale est étroite.

Un but de l'invention est donc de proposer une solution qui permet de façon particulièrement simple de contrôler la largeur spectrale des impulsions le long de la ligne de transmission.

On sait depuis plusieurs années qu'il est souhaitable, dans les systèmes de transmission à impulsions RZ, de disposer de moyens de compensation de dispersion répartis tout le long de la ligne de transmission.

On pourra à cet égard avantageusement se référer à l'article ; « Partial Soliton Communication System » - Optics Communications 87 - 1992-15-18.

Le document WO 97 20403 décrit un système de transmission soliton comprenant un émetteur et un récepteur reliés par une fibre optique. Cette fibre est divisée en une alternance de sections de fibres de dispersion anormale et de sections de fibres de dispersion normales, ces sections présentant des longueurs égales.

Généralement, ces moyens de compensation de dispersion sont répartis à intervalle régulier le long de la fibre de la ligne de transmission. Ils sont tous identiques et assurent chacun la même compensation de dispersion.

L'invention propose quant à elle un système de transmission par fibre optique à Impulsions RZ comportant des moyens d'émission, des moyens de réception et une ligne de transmission qui s'étend entre lesdits moyens d'émission et de réception, les moyens d'émission et de réception mettant en oeuvre un multiplexage en longueur d'onde, la ligne de transmission comportant une pluralité de sections de fibre optique principales présentant une dispersion d'un type donné entre lesquelles sont interposés des moyens de compensation de dispersion, caractérisé en ce que la compensation de dispersion que réalisent lesdits moyens est telle que la largeur du spectre des impulsions en sortie desdits moyens est constante sur la longueur de la ligne de transmission.

Préférentiellement, la ligne de transmission comporté au voisinage du récepteur des moyens pour compenser la dispersion cumulée sur l'ensemble de ladite ligne.

Un tel système est avantageusement utilisé pour une transmission multiplexée en longueur d'onde dont les différents canaux ont un débit de l'ordre de 10 Gbit/s ou supérieur et dont l'espacement entre les canaux est de 25GHz ou inférieur.

Il trouve en particulier avantageusement application pour des systèmes de transmission terrestres.

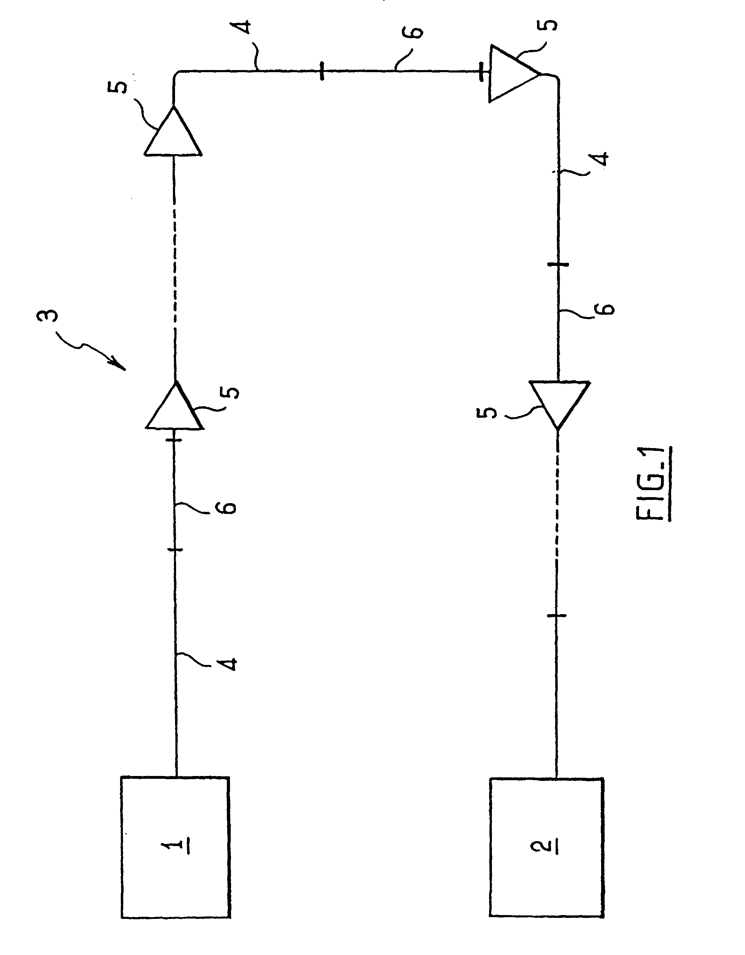

D'autres caractéristiques et avantages de l'invention ressortiront encore de la description qui suit. Cette description est purement illustrative et non limitative. Elle doit être lue en regard de la figure unique annexée sur laquelle on a représenté schématiquement un système de transmission conforme à un mode de réalisation possible de l'invention.

Le système de transmission représenté sur cette figure comporte des moyens émetteurs 1, des moyens récepteurs 2 et une ligne de transmission 3 qui est par exemple une ligne de transmission terrestre et qui s'étend entre lesdits moyens émetteurs et récepteurs 1 et 2.

Les moyens émetteurs 1 et les moyens récepteurs 2 comportent des moyens de multiplexage/démultiplexage qui permettent de transmettre simultanément sur la ligne 3 plusieurs canaux correspondant à différentes longueurs d'onde de transmission.

Les signaux qu'ils émettent et reçoivent sont avantageusement des signaux à impulsions RZ et notamment des solitons. Les « 1 » sont codés avec des impulsions lumineuses de durée entre 40 et 80 ps et les « 0 » sont codés par l'absence d'impulsions.

Le débit de chacun des différents canaux peut être de 10 Gbit/s, les canaux étant espacés de 25GHz les uns des autres. La ligne 3 comporte plusieurs sections 4 de fibre optique entre lesquelles sont interposés des amplificateurs 5, et des moyens de compensation de dispersion 6.

Les sections 4 sont constituées par des portions de fibre optique qui sont par exemple chacune d'une même longueur (préférentiellement de 50 à 100 km).

La fibre de ces sections 4 est une fibre classique d'une dispersion anormale préférentiellement supérieure à 4 ps/nm/km, par exemple de 17 ps/nm/km.

Les moyens 6 de compensation de dispersion sont constitués par des portions d'une fibre de dispersion normale préférentiellement inférieure à -20 ps/nm/km, par exemple de -80 ps/nm/km.

La longueur des différentes portions 6 - c'est à dire la compensation qu'elles réalisent - n'est pas identique sur toute la ligne de transmission.

Cette longueur est choisie lors de l'assemblage de la ligne de transmission de façon à parfaitement contrôler la largeur du spectre des impulsions.

Plus précisément, la compensation réalisée par une portion 6 est choisie non pas en fonction de la dispersion cumulée sur la section 4 de fibre anormale qui la précède, mais en fonction de la largeur du spectre des impulsions en sortie de la portion 6, cette largeur étant maintenue constante par lesdites portions 6 sur toute la longueur de la ligne de transmission.

Ainsi, dans le cas où les sections 4 de fibre anormale ont chacune une longueur de 100 km - ce qui correspond à une dispersion cumulée sur chacune de ces sections de 1700 ps/nm - la compensation de dispersion réalisée par une portion 6 pourra être de -1500 ps/nm si lors de l'assemblage, on constate une tendance à l'élargissement du spectre des impulsions en sortie de cette portion de compensation 6 ; elle pourra être de -1900 ps/nm si l'on constate au contraire que le spectre a tendance à se rétrécir.

En outre, pour que la dispersion soit néanmoins correctement compensée sur l'ensemble de la ligne de transmission 3, la longueur de la portion de compensation 6 juste avant les moyens récepteurs 2 est choisie pour compenser de la façon qui est souhaitée la dispersion cumulée sur l'ensemble de la ligne de transmission, par exemple pour que la dispersion globale sur l'ensemble de la ligne de transmission soit égale à quelques dixièmes de ps/nm/km par exemple, typiquement de l'ordre de 100 ps/nm.

A titre d'exemple, une structure du type de celle qui vient d'être décrite permet de réaliser une transmission multiplexée en longueur d'onde de Nx10 Gbit/s (avec N entier) sur 5x100 km (jusqu'à 30 dB de perte par pas) avec 25 GHz d'espacement entre canaux ; ou encore une transmission multiplexée en longueur d'onde de Nx10 Gbit/s (avec N entier) sur 12x100 km (jusqu'à 25 dB de perte par pas) avec 25 GHz d'espacement entre canaux.

L'invention a été ici décrite dans le cas où on utilise comme moyens de compensation des portions de fibre optique de dispersion de signe inverse par rapport à celle des portions principales de la ligne de transmission. Bien entendu, d'autres types de moyens de compensation de dispersion pourrait être envisagés.

## Revendications

1. Système de transmission par fibre optique à impulsions RZ comportant des moyens d'émission (1), des moyens de réception (2) et une ligne de transmission (3) qui s'étend entre lesdits moyens d'émission (1) et de réception (2), les moyens d'émission et de réception mettant en oeuvre un multiplexage en longueur d'onde, la ligne de transmission (3) comportant une pluralité de sections de fibre optique principales (4) présentant une dispersion d'un type donné entre lesquelles sont interposés des moyens de compensation de dispersion constitués par des portions de fibres (6) présentant une dispersion de signe opposé, **caractérisé en ce que** les longueurs des différentes portions de fibre (6) de compensation sont choisies pour que la largeur du spectre des impulsions en sortie desdits moyens soit constante sur la longueur de la ligne de transmission (3).

2. Système selon la revendication 1, **caractérisé en ce que** la ligne de transmission (3) comporte au voisinage du récepteur (2) des moyens pour compenser la dispersion cumulée sur l'ensemble de ladite ligne.

3. Système selon l'une des revendications précédentes, **caractérisé en ce que** les sections de fibre optique principales (4) sont de dispersion anormale.

4. Système selon l'une des revendications précédentes, **caractérisé en ce que** les sections de fibre optique principales ont une longueur de l'ordre de 50 à 100 km.

5. Système selon l'une des revendications précédentes, **caractérisé en ce que** les impulsions RZ sont d'une durée de l'ordre de 40 à 80 ps.

6. Système de transmission par fibre optique à Impulsions RZ multiplexées en longueur d'onde dont les différents canaux ont un débit de l'ordre de 10 Gbit/s ou supérieur et dont l'espacement entre les canaux est de 25GHz ou inférieur, **caractérisé en ce qu'**il est constitué par un système selon l'une des revendications précédentes.

7. Système de transmission terrestre **caractérisé en ce qu'**il est constitué par un système selon l'une des revendications précédentes.

## Patentansprüche

1. System zum Übertragen von RZ-Pulsen über eine optische Faser umfassend Sendermittel (1), Empfangsmittel (2) und eine Übertragungsleitung (3), die sich zwischen den Sendemitteln (1) und den Empfangsmitteln (2) erstreckt, wobei die Sende- und die Empfangsmittel einen Wellenlängenmultiplex-Vorgang durchführen, wobei die Übertragungsleitung (3) mehrere faseroptische Hauptabschnitte (4) mit Dispersion einer bestimmten Art umfasst, zwischen denen Mittel für die Kompensation der Dispersion angeordnet sind, die aus Faserstücken (6) mit einer Dispersion entgegengesetzten Vorzeichens aufgebaut sind, **dadurch gekennzeichnet, dass** die Längen der verschiedenen Faserstücke (6) für die Kompensation derart gewählt sind, dass die Breite des Pulsspektrums am Ausgang der Mittel über die Länge der Übertragungsleitung (3) konstant ist.

2. System nach Anspruch 1, **dadurch gekennzeichnet, dass** die Übertragungsleitung (3) in der Nähe des Empfängers (2) Mittel zum Kompensieren der über die gesamte Leitung kumulierten Dispersion umfasst.

3. System nach einem der vorangehenden Ansprüche, **dadurch gekennzeichnet, dass** die faseroptischen Hauptabschnitte (4) eine anomale Dispersion aufweisen.

4. System nach einem der vorangehenden Ansprüche, **dadurch gekennzeichnet, dass** die Länge der faseroptischen Hauptabschnitte in der Größenordnung zwischen 50 und 100 km liegt.

5. System nach einem der vorangehenden Ansprüche, **dadurch gekennzeichnet, dass** die Dauer der RZ-Pulse in der Größenordnung zwischen 40 und 80 ps liegt.

6. System zum Übertragen von Wellenlängen-gemultiplexten RZ-Pulsen über eine optische Faser, wobei die verschiedenen Kanäle eine Übertragungsrate in der Größenordnung von 10 Gbit/s oder darüber aufweisen und der Abstand zwischen den Kanälen 25 GHz oder weniger beträgt, **dadurch gekennzeichnet, dass** es mit einem System nach einem der vorangehenden Ansprüche aufgebaut ist.

7. System für eine terrestrische Übertragung, **dadurch gekennzeichnet, dass** es mit einem System nach einem der vorangehenden Ansprüche aufgebaut ist.

## Claims

1. An optical fiber transmission system using RZ pulses, the system comprising emitter means (1), receiver means (2), and a transmission line (3) which extends between said emitter means (1) and receiver means (2), the emitter and receiver means implementing wavelength division multiplexing, the transmission line (3) comprising a plurality of main optical fiber sections (4) presenting dispersion of a given type with dispersion-compensating means being interposed therebetween, said means being constituted by fiber portions (6) presenting dispersion of opposite sign, the system being **characterized in that** the lengths of the various compensation fiber portions (6) are selected so that the spectrum width of pulses at the outlet from said means is constant over the length of the transmission line.

2. A system according to claim 1, **characterized in that** the transmission line (3) includes means in the vicinity of the receiver (2) for compensating the cumulative dispersion as accumulated over the entire line.

3. A system according to either preceding claim, **characterized in that** the main optical fiber sections (4) have abnormal dispersion.

4. A system according to any preceding claim, **characterized in that** the main optical fiber sections are of a length lying in the range about 50 km to about 100 km.

5. A system according to any preceding claim, **characterized in that** the RZ pulses have a duration tying in the range about 40 ps to about 80 ps.

6. An optical fiber transmission system using wavelength division multiplexed RZ pulses with the various channels having a data rate of about 10 Gbit/s or higher and with the spacing between the channels being 25 GHz or less, the system being **characterized in that** it is constituted by a system according to any preceding claim.

7. A terrestrial transmission system, **characterized in that** it is constituted by a system according to any preceding claim.
